(19) Europäisches Patentamt / European Patent Office / Office européen des brevets

(11) **EP 3 144 345 B1**

(12) **EUROPEAN PATENT SPECIFICATION**

(45) Date of publication and mention
of the grant of the patent:
**19.06.2019 Bulletin 2019/25**

(21) Application number: **15826486.1**

(22) Date of filing: **30.07.2015**

(51) Int Cl.:
*C08J 11/16* (2006.01)  *B09B 3/00* (2006.01)
*C02F 11/00* (2006.01)  *C02F 11/10* (2006.01)
*C10G 1/10* (2006.01)  *C10G 1/08* (2006.01)
*C10L 5/40* (2006.01)  *C10J 3/46* (2006.01)

(86) International application number:
**PCT/JP2015/003844**

(87) International publication number:
**WO 2016/017176 (04.02.2016 Gazette 2016/05)**

(54) **THERMAL DECOMPOSITION METHOD FOR ORGANIC SUBSTANCES**

VERFAHREN ZUR THERMISCHEN ZERSETZUNG VON ORGANISCHEN SUBSTANZEN

PROCÉDÉ DE DÉCOMPOSITION THERMIQUE DE SUBSTANCES ORGANIQUES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.07.2014 JP 2014155653**

(43) Date of publication of application:
**22.03.2017 Bulletin 2017/12**

(73) Proprietor: **JFE Steel Corporation
Tokyo 100-0011 (JP)**

(72) Inventors:
• **ISHII, Jun
Tokyo 100-0011 (JP)**
• **TAKAGI, Katsuhiko
Tokyo 100-0011 (JP)**

• **MOMONO, Koichi
Tokyo 100-0011 (JP)**
• **ASANUMA, Minoru
Tokyo 100-0011 (JP)**

(74) Representative: **Hoffmann Eitle
Patent- und Rechtsanwälte PartmbB
Arabellastraße 30
81925 München (DE)**

(56) References cited:
**WO-A1-2008/111750     JP-A- H08 253 601
JP-A- H10 245 568       JP-A- 2005 015 700
JP-A- 2005 111 394      JP-A- 2010 013 657
JP-A- 2014 037 524      US-A- 5 554 207
US-A1- 2001 047 699     US-A1- 2010 068 088**

## Description

Technical Field

The present invention relates to a method of efficient thermal decomposition of an organic substance to produce gas and oil with high calorific power (high heating value).

Background Art

Energy problems have recently become major issues, and methods for effectively harnessing the heating value of organic substances such as waste plastic and biomass have been studied as one approach for solving energy problems. However, these organic substances when unprocessed have low heating value and burn at low rate because they are solids, which causes a problem associated with the generation of ash. To solve this problem, various techniques such as liquefaction and gasification have been proposed.

For example, Patent Literature 1 describes a method of catalytic cracking of waste plastic on its surface in contact with a fluid catalytic cracking (FCC) catalyst by mixing the FCC catalyst with the waste plastic in a rotary kiln-type reactor. According to this method, the use of the FCC catalyst allows the waste plastic to be decomposed at low temperatures of 350°C to 500°C.

Patent Literature 2 describes a method of decomposition of an organic substance with a gas containing hydrogen, water vapor, and carbon dioxide these generated by a shift reaction caused by adding water vapor to a gas containing carbon monoxide and generated by a metallurgical furnace. This method can cause efficient decomposition and gasification of organic substances at 400°C to 800°C and suppress production of heavy products compared with hydrogenation, hydrogenolysis, steam reforming, and carbon dioxide reforming.

Patent Literature 3 describes a method of recovering metallic iron values in waste iron oxide dust, comprising recovering waste iron oxide dust at a temperature sufficient to soften and melt a water-insoluble thermoplastic material, mixing the hot iron oxide dust and the plastic in proportions sufficient to soften and melt the plastic to form a binder for the iron oxide dust, agglomerating the mixture into a particulate form suitable for introduction into a steelmaking furnace, adding the particulate mixture to a steelmaking furnace, and combusting the plastic binder.

Patent Literature 4 describes a method for lowering the molecular weight of an organic substance. The method comprises contacting the organic substance with a mixed gas including hydrogen, carbon dioxide and water vapor in a fluidized bed reactor containing granules comprising at least one kind selected from Fe, Ni and Cr.

Citation List

Patent Literature

PTL 1: Japanese Unexamined Patent Application Publication No. 2010-13657
PTL 2: Japanese Unexamined Patent Application Publication No. 2012-188641
PTL 3: US 5 554 207 A
PTL 4: JP 2014 037524 A

Summary of Invention

Technical Problem

In the method described in Patent Literature 1, the use of the FCC catalyst allows decomposition of waste plastic at low temperatures to produce gas and oil with high heating value. However, the contact efficiency between the catalyst and the waste plastic is low. To improve the contact efficiency, the waste plastic typically needs to be finely pulverized so as to pass through a sieve having a 1 mm mesh. The fine pulverization of the waste plastic increases the cost, and the pulverization itself is very difficult for particular resins.

The method described in Patent Literature 2 allows the decomposition of organic substances at low temperatures by using reformed gas. Organic substances, such as plastics, commonly have very low thermal conductivity and take a long time to increase in temperature, which results in a limited amount of organic substances to be processed. Particularly in the case of plastics, critical problems may arise, for example, an excessive amount of raw materials placed in a reactor may cause plastics in a molten state to be fused together, which blocks the reactor.

To solve the above-mentioned problems of the techniques known in the art, an object of the present invention is to provide a thermal decomposition method that allows efficient thermal decomposition of an organic substance such as a plastic to produce gas and oil with high heating value and with which a large amount of the organic substance can be processed.

Solution to Problem

To solve the above-mentioned problems, the inventors of the present invention consider it is necessary to increase the efficiency of thermal decomposition of an organic substance with a catalyst (organic substance decomposition catalyst). As a result of experiments and discussions, the inventors of the present invention have found that the rate of thermal decomposition of an organic substance can be effectively increased by subjecting, to a thermal decomposition process, a material formed by mixing an organic substance with a catalyst, namely, a formed material (agglomerated material) obtained by dispersing the catalyst in the organic substance.

The present invention has been made based on such a finding and is summarized below.

[1] A method of thermal decomposition of an organic substance includes mixing an organic substance with an organic substance decomposition catalyst in a mixer to obtain a mixture of the organic substance and the organic substance decomposition catalyst, extrusion molding, ring die molding or briquette forming the mixture to produce a composite agglomerated material, and thermally decomposing the organic substance by placing the composite agglomerated material in a fluid bed type thermal decomposition furnace.

[2] In the method of thermal decomposition of an organic substance according to [1], the organic substance decomposition catalyst is a metal-based catalyst.

[3] In the method of thermal decomposition of an organic substance according to [1], the organic substance decomposition catalyst is dust generated in an iron mill.

[4] In the method of thermal decomposition of an organic substance according to [3], the dust generated in an iron mill is converter dust.

[5] In the method of thermal decomposition of an organic substance according to [1], a bed material in a fluid bed is the same granular material that is used as the organic substance decomposition catalyst.

Advantageous Effects of Invention

According to the present invention, the maximum catalytic effect can be obtained since an organic substance and a catalyst (organic substance decomposition catalyst) are close to each other in a composite agglomerated material. The catalyst has thermal conductivity higher than that of the organic substance. In particular, the use of a metal-based catalyst significantly improves the temperature rising rate of the organic substance. As a result, the efficiency of thermal decomposition of the organic substance by the catalyst can be improved, and the rate of thermal decomposition of the organic substance can be effectively increased, which enables a large amount of the organic substance to be processed.

In the method of thermal decomposition of an organic substance by placing a composite agglomerated material in a fluid bed type thermal decomposition furnace, the composite agglomerated material tends to go down to the lower part of the fluid bed because of its large specific gravity compared with the organic substance alone, which can increase the reaction region in the fluid bed and thus can further increase the amount of the organic substance to be processed.

Brief Description of Drawings

Fig. 1 is an explanatory diagram illustrating an example production flow for obtaining a composite agglomerated material in a method of the present invention.
Fig. 2 is an explanatory diagram illustrating an embodiment of the thermal decomposition treatment in a thermal decomposition furnace in the method of the present invention.
Fig. 3 is an explanatory diagram schematically illustrating a gasification test apparatus used in Example.

Description of Embodiments

A method of thermal decomposition of an organic substance according to the present invention involves mixing an organic substance with an organic substance decomposition catalyst (hereinafter referred to simply as a "catalyst" for convenience of description), specifically forming (i.e. molding) the mixture to produce a composite agglomerated material, and thermally decomposing the organic substance by placing the composite agglomerated material in a thermal decomposition furnace. In the present invention, the organic substance and the catalyst are close to each other in the composite agglomerated material, which increases the contact area between them and thus allows efficient thermal decomposition of the organic substance by the action of the catalyst. Since the catalyst has thermal conductivity higher than that of the organic substance, the temperature rising rate of the organic substance can be increased. As a result, the efficiency of thermal decomposition of the organic substance by the catalyst can be improved, and the rate of thermal decomposition of the organic substance can be effectively increased.

In the present invention, the organic substance (solid) to be thermally decomposed is not limited, but preferably an organic substance having a high molecular weight. Examples of the organic substance include plastic (normally waste plastic) and biomass. The target can be one or more of these organic substances or a mixture thereof.

Examples of plastics include, but are not limited to, polyolefins, PA (polyamide), thermoplastic polyesters, PS (polystyrene), elastomers, thermosetting resins, synthetic rubbers, and expanded polystyrene. Examples of polyolefins include PE (polyethylene) and PP (polypropylene). Examples of thermoplastic polyesters include PET (polyethylene terephthalate).

Examples of biomass include, but are not limited to, sewage sludge, paper, wood (e.g., construction waste wood, packing/transportation waste wood, and timber from forest thinning).

The catalyst is preferably in the form of granules in order to disperse the catalyst in the composite agglomerated material containing the organic substance. The size is preferably, but not necessarily, such that the catalyst can pass through a sieve having a 0.5 mm mesh. As a catalyst, an ordinary thermal decomposition catalyst, such as an FCC catalyst, can be used. From the viewpoint of high thermal conductivity, a catalyst containing a metal, such as Fe or Ni, as a main component, namely, a metal-based catalyst, is preferred. In particular, dust generated in each process in an iron mill (dust generated in an iron mill), which contains iron as a main component and is inexpensive, is suitable as a catalyst in the method of the present invention. Typical examples of the dust generated in an iron mill include, but are not limited to, converter dust. Since the converter dust has high iron content ratio and very high thermal conductivity among dust generated in an iron mill, the converter dust is most suitable as a catalyst in the method of the present invention. The converter dust is iron-containing dust generated in a steel making process performed using a converter. Examples of the steel making process include, but are not limited to, the dephosphorization process, the decarbonization process, and the process for refining stainless steel.

The amount of the catalyst added to the organic substance is appropriately selected according to the types of the organic substance and the catalyst. When the organic substance is a plastic or biomass and the catalyst is dust generated in an iron mill (e.g., converter dust), the amount of the catalyst is preferably about 10 to 60 mass% of the organic substance. When the amount of the catalyst added is less than 10 mass% of the organic substance, the contact area between the catalyst and the organic substance is small, which decreases advantageous effects of the present invention. When the amount of the catalyst added is more than 60 mass% of the organic substance, it is difficult to form a mixture of the organic substance and the catalyst.

Since the organic substance needs to have a size small enough to be uniformly mixed with the catalyst, the organic substance is crushed in advance as desired. It is noted that, since the size of the organic substance is only small enough to be uniformly mixed with the catalyst, the organic substance only needs to be pulverized so as to pass through a sieve having a 50 mm mesh and does not need to be finely pulverized.

To ensure the strength of the formed composite agglomerated material, an appropriate amount of a binder is preferably added when the organic substance and the catalyst are mixed. As the binder, an organic binder for general use can be used and, for example, PVA (polyvinyl alcohol) or starch can be used.

When the organic substance is a plastic, heating to 120°C or higher usually softens and melts the plastic, which allows the plastic itself to function as a binder. Thus, the binder is not necessarily added. Depending on the forming (molding) method, the composite agglomerated material having appropriate strength can be obtained without adding the binder.

When the composite agglomerated material is formed (molded), the catalyst and an optional binder are added to the organic substance in advance and the mixture is mixed well with a mixer. This enables the catalyst to be uniformly dispersed while ensuring the strength of the formed (molded) composite agglomerated material.

The method for forming (molding) the mixture of the organic substance with the catalyst is selected from extrusion molding, ring die molding, and briquette forming. In particular, forming (molding) with an extruder having a kneading mechanism attributed to a screw or the like is preferred in order to increase the uniform mixability between the organic substance and the catalyst. In this case, it is more preferred that kneading be performed at a temperature at which 80 mass% or more of the plastic softens or melts. As the softening temperature, a temperature higher than or equal to the Vicat softening point determined in accordance with JIS K7206 (1999) can be used. As the melting temperature, a temperature higher than or equal to the melting point obtained by differential scanning calorimetry described in JIS K7121 (1987) can be used.

In general, the size of the formed (molded) composite agglomerated material is preferably, but not necessarily, about 3 mm to 50 mm in terms of average particle size. To obtain the composite agglomerated material having an average particle size of less than 3 mm, the organic substance needs to be finely pulverized and a significantly large labor is thus needed. When the average particle size of the composite agglomerated material (weight average particle size of many particles) is more than 50 mm, the surface area of reaction with gas is small, which may significantly reduce the gasification rate.

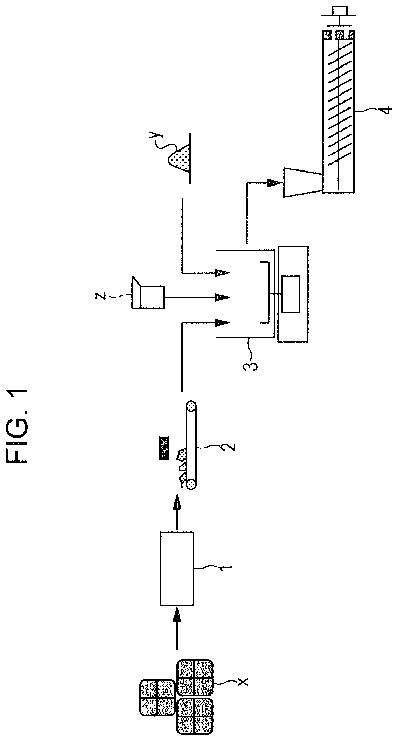

Fig. 1 illustrates an example production flow for obtaining the composite agglomerated material when the organic substance is waste plastic. In this production flow, waste plastic x is crushed by a crusher 1, metal materials are then removed by a magnetic separator 2, and the waste plastic x is then placed in a mixer 3. In this mixer 3, a catalyst y (e.g. converter dust) and a binder z (e.g., PVA aqueous solution) are placed, and these components and the waste plastic x are mixed under stirring. The resulting mixture is formed (molded) by a twin-screw extruder 4 having a kneading mechanism attributed to screws to obtain a composite agglomerated material (formed or molded material).

A method of thermal decomposition of the composite agglomerated material (organic substance) is any of ordinary thermal decomposition methods. For example, as described in Patent Literature 2, the organic substance may be thermally decomposed at a predetermined temperature by bringing a gas mixture containing hydrogen, carbon dioxide, and water vapor into contact with the composite agglomerated material (organic substance). Another type of thermal decomposition method may be employed.

The type of thermal decomposition furnace in which the composite agglomerated material is placed is a fluid bed type thermal decomposition furnace. When the organic substance is thermally decomposed by placing the composite agglomerated material in the fluid bed type thermal decomposition furnace, the composite agglomerated material tends to go down to the lower part of the fluid bed because of its large specific gravity compared with the organic substance alone, which can increase the reaction region in the fluid bed and thus can increase the amount of the organic substance to be processed.

A bed material is used in the fluid bed type thermal decomposition furnace. Depending on the type of catalyst used in the composite agglomerated material, a catalyst (e.g., converter dust) separated from the composite agglomerated material by the thermal decomposition of the organic substance can serve as a bed material. Therefore, when such a catalyst is used and the same granular material that is used as the catalyst is used as a bed material at the start of operation, the bed material is supplied through the composite agglomerated material after the start, which eliminates the need for supplying a bed material alone.

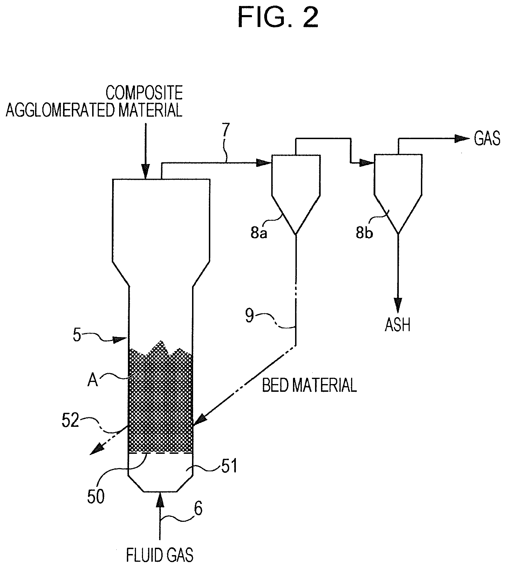

Fig. 2 illustrates an embodiment of the thermal decomposition treatment in such a fluid bed type thermal decomposition furnace, where reference symbol 5 indicates a fluid bed type thermal decomposition furnace and reference symbol A indicates a fluid bed.

In a thermal decomposition furnace 5, a fluid gas (gas mixture) is introduced into a wind box 51 under a dispersion plate 50 through a gas supply pipe 6, this fluid gas is released from the dispersion plate 50, and a fluid bed A attributed to a bed material is accordingly formed above the dispersion plate 50. A composite agglomerated material is supplied to the fluid bed A from the upper part of the thermal decomposition furnace 5. The organic substance in the composite agglomerated material is thermally decomposed in the fluid bed A to generate a gas product. The catalyst separated from the organic substance serves as part of the bed material.

After a gas containing the gas product is discharged through a discharge pipe 7, the bed material and the ash of the organic substance released into the gas is collected by dust collectors (e.g., cyclones). In this embodiment, a primary dust collector 8a and a secondary dust collector 8b are provided in the discharge pipe 7. The primary dust collector 8a mainly collects the bed material, and the secondary dust collector 8b mainly collects the ash of the organic substance. The gas after the bed material has been collected by the primary dust collector 8a is supplied to the secondary dust collector 8b. The gas after the ash has been collected by the secondary dust collector 8b is discharged to the outside of the secondary dust collector 8b and collected. The gas with the high heating value to be collected is collected accordingly.

The collected material collected by the primary dust collector 8a and mainly containing the bed material may be circulated back to the thermal decomposition furnace 5 through a return pipe 9.

Since the catalyst separated from the organic substance serves as part of the bed material, part of the bed material may be extracted through an extraction part 52 as desired in order to maintain the amount of the bed material in the system to be constant.

After the produced gas is further washed with water in a scrubber to remove microparticles, oil, and the like that have not been separated by the dust collectors, the resultant gas can be used as a fuel. The oil collected in wash water in the scrubber can be recovered through an oil-water separator and then used as a fuel. As the oil-water separator, a system, such as a filter-type system or a tilted plate-type system, can be employed.

EXAMPLES

In accordance with the production flow illustrated in Fig. 1, a composite agglomerated material containing waste plastic and converter dust (catalyst), which contained a metal such as iron as a main component, was produced as described below. The waste plastic was crushed into a size of about 50 mm or less by a crusher, and metal materials were then removed by a magnetic separator. The waste plastic was placed in a mixer together with a 5% aqueous solution of PVA (binder) in an amount of 3 mass% of the waste plastic (the amount of PVA was 0.15 mass% of the waste plastic) and converter dust having a harmonic mean diameter of about 100 $\mu$m (the mass ratio of the waste plastic to the converter dust = 7:3), which was a catalyst. The mixture was mixed well under stirring and then agglomerated (formed) by a twin-screw extruder to produce a composite agglomerated material that had a size of 4 mm in diameter $\phi$ and 10 to 20 mm in length and contained the converter dust. The diameter of a die of the twin-screw extruder used was 4 mm, and the temperature of the die was 190°C. The waste plastic was composed mainly of polyethylene, polystyrene, and polypropylene, and the kneading temperature was 160°C.

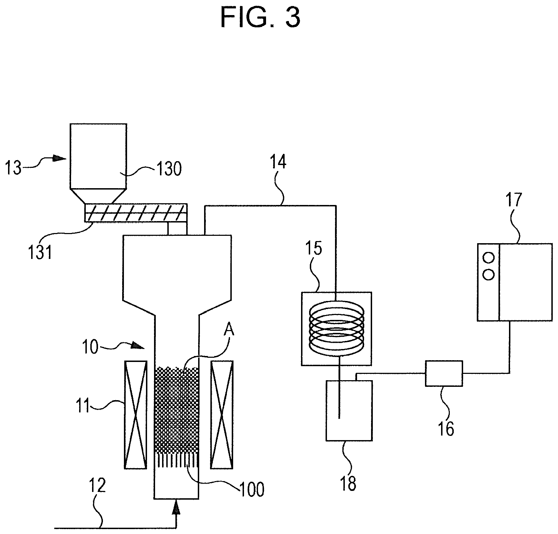

The gasification test for the composite agglomerated material obtained as described above was performed by using the fluid bed type gasification test apparatus illustrated in Fig. 3 (Invention Example). In this test, the plastic in the composite agglomerated material was gasified at 600°C, and the lower heating value of the gas, the gasification rate, and the like were obtained from the gas yield and the gas composition determined.

In Fig. 3, reference symbol 10 indicates a fluid bed gasifying furnace (reference symbol 11 indicates heaters for the fluid bed gasifying furnace). In the fluid-bed gasifying furnace 10, a fluid gas was introduced under a dispersion plate 100 through a gas supply pipe 12, and the fluid gas was released from the dispersion plate 100 to form a fluid bed A above the dispersion plate 100. The raw material (agglomerated material) to be gasified was supplied to the furnace from the upper part of the fluid-bed gasifying furnace 10 through a raw-material supply unit 13 including a holding container 130 and a screw 131 for constant supply. The gas in the fluid-bed gasifying furnace 10 was removed through a discharge pipe 14 and cooled by a gas cooler 15 (reference symbol 18 indicates a gas trap). The gas flow rate was then continuously determined with a mass flow meter 16, and the gas composition was determined with gas chromatography equipment 17. The inner diameter of the fluid-bed gasifying furnace 10 in which the fluid bed A was formed was 66 mm.

As a bed material, converter dust having a harmonic mean diameter of 100 $\mu$m, which was the same as the catalyst, was used. The supply rate of the composite agglomerated material through the raw-material supply unit 13 was 300 g/h. As a fluid gas, a gas mixture containing $H_2$, $N_2$, $CO_2$, and $H_2O$ was supplied at a rate of 4 L/min.

As Comparative Example, only waste plastic from which metal materials had been removed by a magnetic separator after crushed by a crusher was agglomerated (formed) by a twin-screw extruder, and the gasification test as described above was performed for the waste plastic agglomerated material. The size of the waste plastic crushed by the crusher and the size of the waste plastic agglomerated material were substantially the same as those in Example described above.

The results of the gasification test in Invention Example and Comparative Example are shown in Table 1. In Invention Example, the waste plastic percentage was relatively small and the amount of the waste plastic supplied was small. However, the gasification rate was significantly large and the heating value of the produced gas was very high. This is probably because the catalyst dispersed in the composite agglomerated material improves the gasification reaction rate. In Table 1, the waste plastic percentage refers to the percentage of the waste plastic in the agglomerated material, and the converter dust percentage refers to the percentage of the converter dust in the agglomerated material. In Invention Example, each value was obtained approximating the amount of PVA added as zero.

The gasification rate refers to the ratio of the amount of carbon transferred into the produced gas to the amount of carbon in the waste plastic and is represented by the following formula.

```
Gasification rate = (carbon content (kg/h) in produced gas -
carbon content (kg/h) in fluid gas)/carbon content (kg/h) in
waste plastic × 100
```

[Table 1]

|  | Invention Example | Comparative Example |
|---|---|---|
| Waste plastic percentage (mass%) | 70 | 100 |
| Converter dust percentage (mass%) | 30 | 0 |
| Lower heating value of agglomerated material (kcal/kg) | 5660 | 8250 |
| Lower heating value of gasified gas (kcal/Nm$^3$) | 1030 | 1030 |
| Lower heating value of produced gas (kcal/Nm$^3$) | 5760 | 3870 |

(continued)

|  | Invention Example | Comparative Example |
| --- | --- | --- |
| Gasification rate (%) | 62 | 41 |

Reference Signs List

| 1 | Crusher |
| --- | --- |
| 2 | Magnetic Separator |
| 3 | Mixer |
| 4 | Twin-Screw Extruder |
| 5 | Thermal Decomposition Furnace |
| 6 | Gas Supply Pipe |
| 7 | Discharge Pipe |
| 8a | Primary Dust Collector |
| 8b | Secondary Dust Collector |
| 9 | Return Pipe |
| 10 | Fluid-Bed Gasifying Furnace |
| 11 | Heater |
| 12 | Gas Supply Pipe |
| 13 | Raw-Material Supply Unit |
| 130 | Holding Container |
| 131 | Screw for Constant Supply |
| 14 | Discharge Pipe |
| 15 | Gas Cooler |
| 16 | Mass Flow Meter |
| 17 | Gas Chromatography Equipment |
| 18 | Gas Trap |
| 50 | Dispersion Plate |
| 51 | Wind Box |
| 52 | Extraction Part |
| 100 | Dispersion Plate |
| x | Waste Plastic |
| y | Catalyst |
| z | Binder |
| A | Fluid Bed |

**Claims**

1. A method of thermal decomposition of an organic substance, comprising:

    mixing an organic substance with an organic substance decomposition catalyst in a mixer to obtain a mixture of the organic substance and the organic substance decomposition catalyst,
    extrusion molding, ring die molding or briquette forming the mixture to produce a composite agglomerated material, and
    thermally decomposing the organic substance by placing the composite agglomerated material in a fluid bed type thermal decomposition furnace.

2. The method of thermal decomposition of an organic substance according to Claim 1, wherein the organic substance decomposition catalyst is a metal-based catalyst.

3. The method of thermal decomposition of an organic substance according to Claim 1, wherein the organic substance decomposition catalyst is dust generated in an iron mill.

**4.** The method of thermal decomposition of an organic substance according to Claim 3, wherein the dust generated in an iron mill is converter dust.

**5.** The method of thermal decomposition of an organic substance according to Claim 1, wherein a bed material in the fluid bed is the same granular material that is used as the organic substance decomposition catalyst.

**Patentansprüche**

**1.** Verfahren zur thermischen Zersetzung einer organischen Substanz, umfassend:

Mischen einer organischen Substanz mit einem Katalysator zur Zersetzung einer organischen Substanz in einem Mischer, so dass ein Gemisch der organischen Substanz und des Katalysators zur Zersetzung einer organischen Substanz erhalten wird,
Extrusionsformen, Ringgesenkformen oder Brikettieren des Gemischs, so dass ein zusammengesetztes agglomeriertes Material hergestellt wird und
thermisches Zersetzen der organischen Substanz durch Platzieren des zusammengesetzten agglomerierten Materials in einem thermischen Zersetzungsofen des Fließbett-Typs.

**2.** Verfahren zur thermischen Zersetzung einer organischen Substanz gemäß Anspruch 1, worin der Katalysator zur Zersetzung der organischen Substanz ein Katalysator auf Metallbasis ist.

**3.** Verfahren zur thermischen Zersetzung einer organischen Substanz gemäß Anspruch 1, worin der Katalysator zur Zersetzung der organischen Substanz in einer Eisenmühle erzeugter Staub ist.

**4.** Verfahren zur thermischen Zersetzung einer organischen Substanz gemäß Anspruch 3, worin der in einer Eisenmühle erzeugte Staub Konverterstaub ist.

**5.** Verfahren zur thermischen Zersetzung einer organischen Substanz gemäß Anspruch 1, worin ein Bettmaterial im Fließbett das gleiche Granulat ist, das als Katalysator zur Zersetzung der organischen Substanz verwendet wird.

**Revendications**

**1.** Procédé de décomposition thermique d'une substance organique, comprenant les étapes consistant à :

mélanger une substance organique avec un catalyseur de décomposition de substance organique dans un mélangeur pour obtenir un mélange de la substance organique et du catalyseur de décomposition de substance organique,
mouler par extrusion, par matrice annulaire ou former en briquettes le mélange pour produire un matériau aggloméré composite, et
décomposer thermiquement la substance organique en plaçant le matériau aggloméré composite dans un four de décomposition thermique du type à lit fluidisé.

**2.** Procédé de décomposition thermique d'une substance organique selon la revendication 1, dans lequel le catalyseur de décomposition de substance organique est un catalyseur à base de métal.

**3.** Procédé de décomposition thermique d'une substance organique selon la revendication 1, dans lequel le catalyseur de décomposition de substance organique est une poussière générée dans un broyeur de ferraille.

**4.** Procédé de décomposition thermique d'une substance organique selon la revendication 3, dans lequel la poussière générée dans un broyeur de ferraille est une poussière de convertisseur.

**5.** Procédé de décomposition thermique d'une substance organique selon la revendication 1, dans lequel un matériau de lit dans le lit fluidisé est le même matériau granulaire que celui utilisé comme catalyseur de décomposition de substance organique.

FIG. 1

# FIG. 2

# FIG. 3

**EP 3 144 345 B1**

**REFERENCES CITED IN THE DESCRIPTION**

**Patent documents cited in the description**

- JP 2010013657 A
- JP 2012188641 A
- US 5554207 A
- JP 2014037524 A